# EUROPEAN PATENT APPLICATION

(11) **EP 2 182 194 A2**
(43) Date of publication of application: **05.05.2010**
(21) Application number: 09174285.8
(22) Date of filing: 28.10.2009
(51) Int. Cl.: F02C 3/34

(54) **System and method for reducing corrosion in a gas turbine system**

(30) Priority: 04.11.2008 US 264315
(71) Applicant: General Electric Company, Schenectady, NY 12345 (US)
(72) Inventor: Botero, Christina, 81929, Munich (DE); Finkenrath, Matthias, 81927, Munich (DE); Barlett, Michael Adam, 11769, Stockholm (SE)
(74) Representative: Gray, Thomas

(57) **Abstract**

A system (10) includes a gas turbine unit (12) configured to generate a combustion gas by combusting a mixture of compressed air and fuel and generate electric power by expanding the combustion gas. A separator (32) is coupled to the gas turbine unit (12) and disposed upstream of the gas turbine unit (12). The separator (32) is configured to reduce sulfur content in the fuel before being fed to the gas turbine unit (12). A portion of an exhaust gas from a gas turbine (18) is recirculated to the gas turbine unit (12).

## Description

### BACKGROUND

The invention relates generally to power generation systems, and more particularly to a system and method for reducing corrosion in a gas turbine system of a simple or combined cycle with exhaust gas recirculation.

It is known that a combined cycle power plant is a high efficiency power generation system. In a combined cycle power plant, steam is generated by using hot exhaust gas discharged from a gas turbine. A steam turbine is driven using the generated steam. One or more generators are driven by the gas turbine and the steam turbine. By using the thermal energy of an exhaust gas from the gas turbine, the combined cycle plant can achieve higher efficiency levels than simple cycle power plants without steam generation.

Recirculation of exhaust gas to the inlet of the compressor results in an increase of the concentration of carbon dioxide and potentially reduction of nitrogen oxide emissions at an exhaust manifold of the gas turbine. A problem, however is that combustion by-products containing sulfur are recirculated to the gas turbine. This may cause corrosion on metal surfaces at the intake manifold of the compressor or during the first compression stage or other areas.

In a conventional method, reduction in sulfur content of the recirculated exhaust gas is achieved by reducing sulfur content in the exhaust gas under close to atmospheric pressure conditions at a location downstream of the gas turbine, for example, at the exhaust gas recirculation path. This sulfur cleanup strategy, however, requires large equipment and large amounts of energy due to the larger volume flow of gas and lower partial pressure of the sulfur-containing components, respectively, leading to higher capital expenditure and higher operating costs. The sulfur content in the exhaust gas also depends on the exhaust gas recirculation rate.

Accordingly, it is desirable to have a system and method that requires smaller equipment and lower energy for reducing the sulfur content in the exhaust gas of a system with exhaust gas recirculation in order to efficiently and economically reduce corrosion risk in a gas turbine.

### BRIEF DESCRIPTION

In accordance with one exemplary embodiment of the present invention, a system includes a gas turbine unit configured to generate a combustion gas by combusting a mixture of compressed air and fuel and generate electric power by expanding the combustion gas. A separator is coupled to the gas turbine unit and disposed upstream of the gas turbine unit. The separator is configured to reduce sulfur content in the fuel before being fed to the gas turbine unit. A portion of an exhaust gas from a gas turbine is recirculated to a gas turbine unit inlet.

In accordance with another exemplary embodiment of the present invention, a combined cycle power generation system comprising a heat recovery unit is disclosed.

In accordance with another exemplary embodiment of the present invention, a system including a cooler in an exhaust gas recirculation line is disclosed.

In accordance with yet another exemplary embodiment of the present invention, a system comprising a carbon dioxide capture unit is disclosed.

In accordance with yet another exemplary embodiment of the present invention, a method for reducing corrosion in a gas turbine unit of an electric power generation system is disclosed.

### DRAWINGS

There follows a detailed description of embodiments of the invention by way of example only with reference to the accompanying drawings, in which:
FIG. 1 is a diagrammatical representation of a system e.g. a power generation system having a separator disposed upstream of a combustor in accordance with an exemplary embodiment of the present invention;
FIG. 2 is a diagrammatical representation of a combined cycle power generation system having a heat recovery unit, an exhaust gas recirculation cooler, a carbon dioxide capture unit, and a separator disposed upstream of a combustor in accordance with an exemplary embodiment of the present invention; and
FIG. 3 is a diagrammatical representation of a system e.g. a power generation system having a carbon dioxide capture unit, and a separator disposed upstream of a combustor in accordance with an exemplary embodiment of the present invention.

### DETAILED DESCRIPTION

As discussed in detail below, embodiments of the present invention discloses a system and method for reducing corrosion in a gas turbine of an electric power generation system. The electric power generation system includes a gas turbine unit configured to generate a combustion gas by combusting a mixture of compressed air and fuel and generate electric power by expanding the combustion gas. A separator is coupled to the gas turbine unit and disposed upstream of the gas turbine unit. The separator is configured to reduce sulfur content in the fuel before being fed to the gas turbine unit. A heat exchanger is optionally coupled to the gas turbine unit and configured to transfer an exhaust gas from the gas turbine unit in heat exchange relationship with a cooling medium so as to generate a cooled exhaust gas. A portion of the exhaust gas from the gas turbine unit or the heat exchanger is recirculated to an inlet of the gas turbine unit. In one embodiment, the electric power generation system is a combined cycle power generation system. In another embodiment, the system includes an exhaust gas recirculation cooler in an exhaust gas recirculation duct of the system. In yet another embodiment, the system includes a carbon dioxide capture unit configured to remove carbon dioxide from the exhaust gas. In yet another embodiment, a method for reducing corrosion in a gas turbine unit of an electric power generation system is disclosed. In accordance with the embodiments of the present invention, sulfur content is reduced in a fuel stream in a separator upstream of a gas turbine unit. Hence smaller equipment and lower amounts of energy are required for reducing sulfur content in the fuel stream, when compared to a system separating sulfur-containing components from the exhaust gas stream. Also, the separation of sulfur content from the fuel stream does not depend on an exhaust gas recirculation rate in the power generation system.

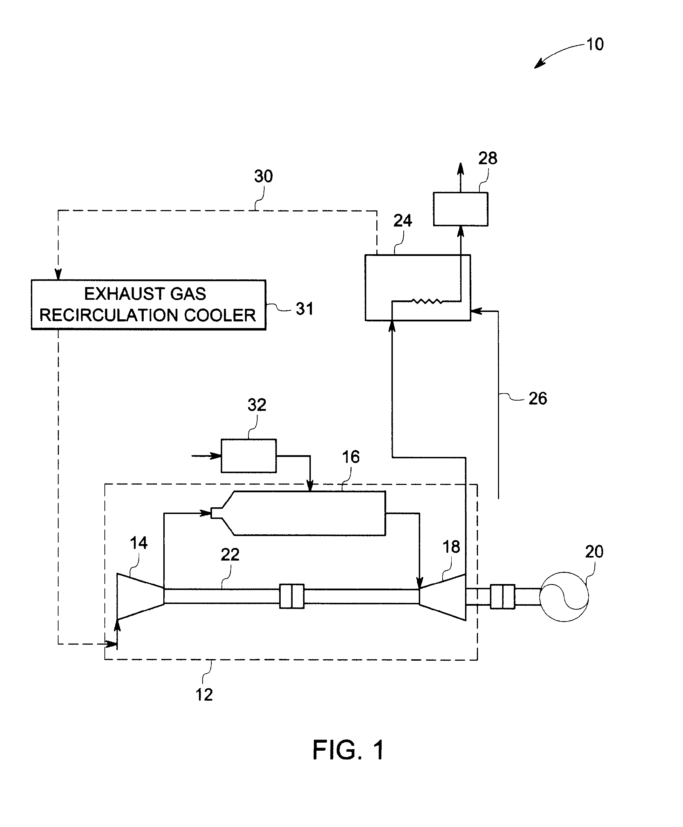

Referring to FIG. 1, an exemplary electric power generation system 10 configured to generate electric power is illustrated. The system 10 includes a gas turbine unit 12 including a compressor 14, a combustor 16, and a turbine 18. The compressor 14 is configured to receive ambient air at atmospheric pressure and to compress the air to a higher pressure. The compressed air is mixed with a gaseous or liquid fuel, for example natural gas, and combusted in the combustor 16. Combustion exhaust gas from the combustor 16 is expanded via the gas turbine 18. A generator 20 coupled to the turbine 18 transforms the mechanical energy into electrical power. It should be noted herein that in some embodiments, the turbine 18 is coupled to a mechanical drive unit. The gas turbine 18 typically drives the compressor 14 via a shaft 22.

The exhaust gas from the gas turbine 18 is optionally passed in heat exchange relationship with a cooling medium, for example feed-water, through a heat exchanger 24. The cooling medium is fed to the heat exchanger 24 through a feed line 26. As a result cooling medium is heated to generate steam. In the illustrated embodiment, one portion of the cooled exhaust gas is vented from the heat exchanger 24 to the atmosphere via a carbon dioxide capture unit 28 and a stack (not shown). Conventional power plants generate pollutants that may be toxic, for example, certain metals and polyaromatic hydrocarbons; sulfur oxides (SOx) such as sulfur dioxide (SO2), and nitrogen oxides (NOx); nitrogen dioxide and reactive organic gases; particulate matter; and greenhouse gases, notably carbon dioxide. The use of natural gas (NG) as a fuel instead of petroleum or coal reduces many emissions and solids wastes; however, burning natural gas in air still produces quantities of nitrogen dioxide, reactive organic gases, and carbon dioxide. Carbon dioxide can be "captured" or removed from the flue gas using methods including chemical or physical absorption, cryogenic fractionation, membrane separation, or the like. Another portion of the cooled exhaust gas is recirculated to the gas turbine unit 12. Flue gas recycling is used for example, to increase the carbon dioxide concentration in the exhaust gas stream and to reduce nitrogen oxide emissions. The other portion of the exhaust gas from the heat exchanger 24 is returned to an air inlet of the compressor 14 via a recirculation duct 30. In other words, the recirculated exhaust gas is mixed with the inlet air of the compressor 14. In the illustrated embodiment, the duct 30 is provided with an exhaust gas recirculation cooler 31 configured to further cool the recirculated portion of the exhaust gas from the heat exchanger 24.

As discussed previously, recirculation of exhaust gas to the inlet of the compressor 14 facilitates to increase concentration of carbon dioxide and potentially reduced nitrogen oxide emissions at an exhaust manifold of the gas turbine. A problem, however is that combustion by-products containing sulfur are recirculated to the gas turbine. This may cause corrosion on metal surfaces at the intake manifold of the compressor 14 or during the first compression stage or in other areas. In the illustrated embodiment, the fuel is fed from a fuel source (not shown) to the combustor 16 via a separator 32 configured to separate sulfur content in the fuel so as to reduce sulfur content in the fuel before being fed to the combustor 16. The separator 32 is disposed upstream of the combustor 16. The sulfur content in the fuel may include but is not limited to hydrogen sulfide, sulfur dioxide, mercaptan, or the like. The separator 32 may separate sulfur content from the fuel using techniques including but not limited to membrane separation, absorption into a solvent, liquid phase oxidation, adsorption with a sorbent, or combinations thereof. In the illustrated embodiment, the separator is configured to reduce the sulfur content to about 100 to 530 parts per billion by weight at a pressure in the range of about 10 to about 100 bars before being fed to the gas turbine unit 12. In the illustrated embodiment, the sulfur content in the exhaust gas generated from the gas turbine unit 12 is about 30 parts per billion by weight when sulfur content in the fuel is reduced upstream of the combustor 16. In one exemplary embodiment, the separator 32 reduces the amount of sulfur dioxide in the fuel from about 4043 parts per billion by weight to about 530 parts per billion by weight. If 40% of the exhaust gas is recirculated from the gas turbine 18 is recirculated to the inlet of the compressor 14, then the amount of sulfur dioxide in the exhaust gas recirculated to the compressor 14 may be around 24 parts per billion by weight, resulting in an inlet gas to the gas turbine compressor 14 with about 10 parts per billion weight.

If reduction in sulfur content of the recirculated exhaust gas is achieved by reducing sulfur content in the exhaust gas under atmospheric pressure conditions at a location downstream of the gas turbine, for example, exhaust gas recirculation path, this requires large equipment and large amount of energy for reducing sulfur content to lower levels at atmospheric conditions, leading to higher capital expenditure and higher operating costs. On the contrary, if the sulfur content is removed from a fuel stream in the separator 32 disposed upstream of the gas turbine operating with exhaust gas recirculation (EGR), less expensive clean up systems and less energy are required. Sulfur content will be most concentrated at highest pressure upstream of the combustor 16. In the illustrated embodiment, the separator 32 is smaller and provides large driving forces for separating sulfur content from the fuel. This leads to lower capital expenditure and lower operating costs.

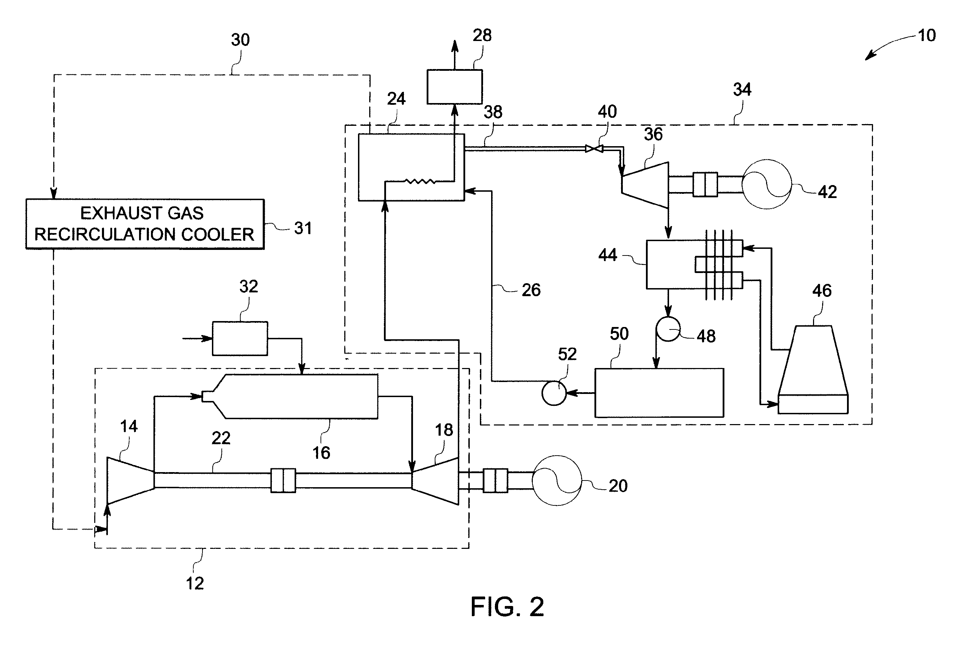

Referring to FIG. 2, an exemplary electric power generation system 10 configured to generate electric power is illustrated. In the illustrated embodiment, the system 10 includes a combined cycle power generation system. The system 10 includes a gas turbine unit 12 including the compressor 14, the combustor 16, and the turbine 18. Combustion exhaust gas from the combustor 16 is expanded via the gas turbine 18. The generator 20 coupled to the turbine 18 transforms the mechanical energy into electrical power.

The exhaust gas from the gas turbine 18 is passed in heat exchange relationship with a cooling medium e.g. feed-water through the heat exchanger 24 of a heat recovery unit 34 configured to produce additional power and increase plant efficiency. In the illustrated embodiment, the heat exchanger 24 is a heat recovery steam boiler. As a result feed-water is heated to generate steam. One portion of cooled exhaust gas from the heat exchanger 24 is returned to an air inlet of the compressor 14 via the recirculation duct 30. Similar to the previous embodiment, the duct 30 may be provided with the exhaust gas recirculation cooler 31 configured to further cool the recirculated portion of the exhaust gas from the heat exchanger 24. In the illustrated embodiment, the remaining portion of the cooled exhaust gas is vented from the heat exchanger 24 to the atmosphere via the carbon dioxide capture unit 28 and a stack (not shown).

In the illustrated embodiment, the steam from the heat exchanger 24 is fed to a steam turbine 36 via a pipe 38. The pipe 38 may be provided with a valve 40 configured to control the flow of steam through the pipe 38. The steam from the heat exchanger 24 is expanded via the steam turbine 36. A generator 42 coupled to the turbine 36 transforms the mechanical energy into electrical power. The steam exiting the steam turbine 36 passes through a condenser 44 where steam is transformed into water. The condenser 44 is cooled using water from a cooling unit, for example, a cooling tower 46 dissipating the steam's latent heat into the atmosphere. The condenser 44 may also be cooled using ambient air or any other cooling medium. The water from the condenser 44 is then passed through a feed pump 48, a deaerator 50, and another feed pump 52 to the heat exchanger 24. The pump 52 feeds the water to the heat exchanger 24 via the feedline 26. It should be noted herein even though the heat recovery unit 34 includes a steam turbine unit; other types of heat recovery system are also envisaged.

Similar to the previously discussed embodiment, the fuel is fed from the fuel source (not shown) to the combustor 16 via the separator 32 configured to separate sulfur content in the fuel so as to reduce sulfur content in the fuel before being fed to the combustor 16. The separator 32 is disposed upstream of the combustor 16. The sulfur content in the fuel may include but is not limited to hydrogen sulfide, sulfur dioxide, mercaptan, or the like. The separator 32 may separate sulfur content from the fuel using techniques including but not limited to membrane separation, absorption into a solvent, liquid phase oxidation, adsorption with a sorbent, or combinations thereof. It should be noted herein that sulfur content may be removed from the fuel upstream of the combustor 16 by any separation process, for example, physical adsorption, chemical adsorption, using membranes, absorption, using differences in boiling point, or the like.

In certain embodiments, the power generation system may include a simple cycle gas turbine provided with exhaust gas recirculation. In such embodiments, the exhaust gas stream from the gas turbine 18 is not cooled via the heat exchanger 24 before being fed to the inlet of the compressor 14. In other words, the exhaust gas stream from the gas turbine 18 is recirculated to the inlet of the compressor 14 via the duct 30. It should be noted herein that in some embodiments, the cooling of recirculated portion of the exhaust gas in the recirculation duct 30 is also optional.

In certain embodiments, one portion of the exhaust gas from the gas turbine 18 is passed in heat exchange relationship with a cooling medium through the heat exchanger 24 and the remaining portion of the exhaust gas from the gas turbine 18 is returned to an air inlet of the compressor 14 via the recirculation duct 30.

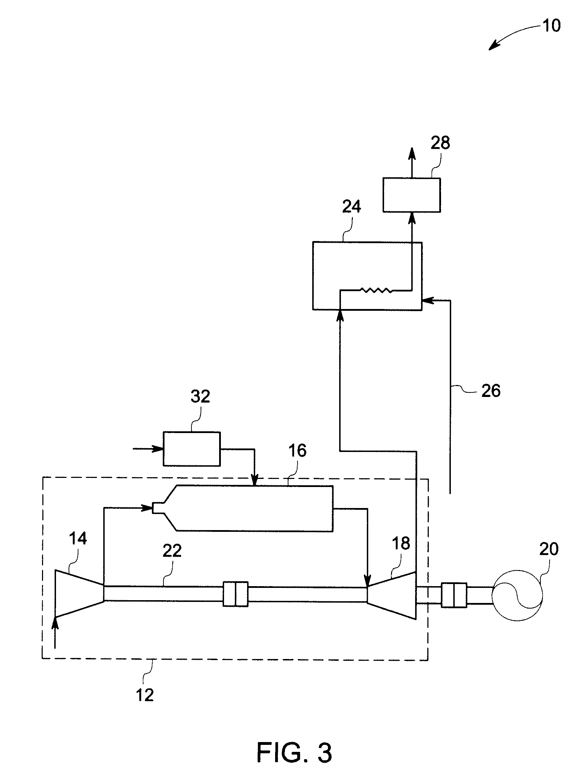

Referring to FIG. 3, an exemplary electric power generation system 10 configured to generate electric power is illustrated. The system 10 includes a gas turbine unit 12 including the compressor 14, the combustor 16, and the turbine 18. The exhaust gas from the gas turbine 18 is passed in heat exchange relationship with a cooling medium e.g. feed-water through the heat exchanger 24. As a result feed-water is heated to generate steam. In the illustrated embodiment, the cooled exhaust gas is vented from the heat exchanger 24 to the atmosphere via the carbon dioxide capture unit 28 and a stack (not shown).

Similar to the previously discussed embodiments, the fuel is fed from the fuel source (not shown) to the combustor 16 via the separator 32 configured to separate sulfur content in the fuel so as to reduce sulfur content in the fuel before being fed to the combustor 16. The separator 32 is disposed upstream of the combustor 16. It should be noted herein that in the illustrated embodiment, the system 10 does not include exhaust gas recirculation. The exhaust gas from the gas turbine 18 includes low sulfur content suitable for passing through the carbon dioxide capture unit 28. In the illustrated embodiment without exhaust gas recirculation, use of a separator prior to the combustor that removes sulphur content could be beneficial over conventional flue gas desulphurization methods which are used downstream of the power plant combustor.

While only certain features of the invention have been illustrated and described herein, many modifications and changes will occur to those skilled in the art. It is, therefore, to be understood that the appended claims are intended to cover all such modifications and changes as fall within the true spirit of the invention.

For completeness, various aspects of the invention are now set out in the following numbered clauses:
1. A system comprising:
   a gas turbine unit comprising;
   a combustor configured to generate a combustion gas by combusting a mixture of compressed air and fuel;
   a gas turbine coupled to the combustor and configured to generate electric power by expanding the combustion gas;
   a separator coupled to the combustor and disposed upstream of the combustor,
   wherein said separator is configured to reduce sulfur content of introduced fuel before said fuel is fed to the combustor.
2. The system of clause 1, wherein the fuel comprises natural gas.
3. The system of clause 1, wherein the sulfur content comprises hydrogen sulfide, sulfur dioxide, mercaptan, or the like.
4. The system of clause 1, wherein the separator is configured to reduce the sulfur content of said fuel by membrane separation, absorption into a solvent, liquid phase oxidation, adsorption with a sorbent, or combinations thereof.
5. The system of clause 1, further comprising a heat exchanger coupled to the gas turbine and disposed downstream of the gas turbine; wherein the heat exchanger is configured to transfer an exhaust gas from the gas turbine in heat exchange relationship with a cooling medium so as to generate a cooled exhaust gas.
6. The system of clause 5; wherein the gas turbine unit comprises a compressor coupled to the combustor and configured to feed compressed air to the combustor; wherein a portion of the cooled exhaust gas from the heat exchanger is recirculated to the compressor via a recirculation duct and mixed with inlet air of the compressor.
7. The system of clause 6, further comprising an exhaust gas recirculation cooler provided to the recirculation duct and configured to further cool the portion of the cooled exhaust gas from the heat exchanger recirculated to the compressor.
8. The system of clause 6, further comprising a carbon dioxide capture unit configured to remove carbon dioxide from a remaining portion of the cooled exhaust gas from the heat exchanger.
9. The system of clause 5, further comprising a carbon dioxide capture unit configured to remove carbon dioxide from the cooled exhaust gas from the heat exchanger.
10. The system of clause 1, wherein the gas turbine unit comprises a compressor coupled to the combustor and configured to feed compressed air to the combustor; wherein at least a portion of an exhaust gas from the gas turbine is recirculated to the compressor via a recirculation duct.
11. The system of clause 10, further comprising an exhaust gas recirculation cooler provided to the recirculation duct and configured to cool at least the portion of the exhaust gas from the gas turbine recirculated to the compressor.
12. The system of clause 1, further comprising a carbon dioxide capture unit configured to remove carbon dioxide from an exhaust gas generated from the gas turbine.
13. The system of clause 1, wherein the system comprises a combined cycle power generation system.
14. A combined cycle power generation system, comprising:
   a gas turbine unit comprising:
      a combustor configured to generate a combustion gas by combusting a mixture of compressed air and fuel;
      a gas turbine coupled to the combustor and configured to generate electric power by expanding the combustion gas;
      a separator coupled to the combustor and disposed upstream of the combustor;
   wherein the separator is configured to reduce sulfur content of said fuel before said fuel is fed to the combustor;
   a heat recovery unit comprising a heat exchanger coupled to the gas turbine and configured to transfer at least a portion of an exhaust gas from the gas turbine in heat exchange relationship with a cooling medium so as to generate a cooled exhaust gas.
15. The system of clause 14, wherein the sulfur content comprises hydrogen sulfide, sulfur dioxide, mercaptan, or the like.
16. The system of clause 14, wherein the separator is configured to reduce the sulfur content of said fuel by membrane separation, absorption into a solvent, liquid phase oxidation, adsorption with a sorbent, or combinations thereof.
17. The system of clause 14; wherein the gas turbine unit comprises a compressor coupled to the combustor and configured to feed compressed air to the combustor; wherein one portion of the cooled exhaust gas from the heat exchanger is recirculated to the compressor via a recirculation duct and mixed with inlet air of the compressor.
18. The system of clause 17, further comprising an exhaust gas recirculation cooler provided to the recirculation duct and configured to further cool the one portion of the cooled exhaust gas from the heat exchanger recirculated to the compressor.
19. The system of clause 17, wherein the heat recovery unit comprises a carbon dioxide unit capture unit configured to remove carbon dioxide from a remaining portion of the cooled exhaust gas fed from the heat exchanger.
20. The system of clause 14, wherein the heat recovery unit comprises a steam turbine unit; wherein the steam turbine unit is configured for generating power by expanding steam generated from the heat exchanger.
21. The system of clause 14, wherein the gas turbine unit comprises a compressor coupled to the combustor and configured to feed compressed air to the combustor; wherein a remaining portion of an exhaust gas from the gas turbine is recirculated to the compressor.
22. A system comprising:
   a gas turbine unit comprising;
   a combustor configured to generate a combustion gas by combusting a mixture of compressed air and fuel;
   a gas turbine coupled to the combustor and configured to generate electric power by expanding the combustion gas;
   a separator coupled to the combustor and disposed upstream of the combustor, wherein said separator is configured to reduce sulfur content of introduced fuel before said fuel is fed to the combustor;
   a heat exchanger coupled to the gas turbine and configured to transfer an exhaust gas from the gas turbine in heat exchange relationship with a cooling medium so as to generate a cooled exhaust gas;
   a carbon dioxide capture unit configured to remove carbon dioxide from the cooled exhaust gas fed from the heat exchanger.
23. A system consisting of:
   a gas turbine unit comprising;
   a compressor configured to generate compressed air;
   a combustor coupled to the compressor and configured to generate a combustion gas by combusting a mixture of compressed air and fuel;
   a gas turbine coupled to the combustor and configured to generate electric power by expanding the combustion gas;
   a separator coupled to the combustor and disposed upstream of the combustor, wherein said separator is configured to reduce sulfur content of introduced fuel before said fuel is fed to the combustor;
      wherein an exhaust gas from the gas turbine is recirculated to the compressor via a recirculation duct.
24. The system of clause 23, further comprising an exhaust gas recirculation cooler provided to the recirculation duct and configured to cool the exhaust gas from the gas turbine recirculated to the compressor.
25. A method for reducing corrosion in a gas turbine unit of an electric power generation system, the method comprising:
   reducing sulfur content in a fuel via a separator disposed upstream of a combustor;
   feeding the fuel from the separator to a combustor;
   combusting a mixture of air and fuel from the separator in the combustor to generate a combustion gas;
   expanding the combustion gas via a gas turbine to generate power.

## Claims

1. A system (10) comprising:
a gas turbine unit (12) comprising;
a combustor (16) configured to generate a combustion gas by combusting a mixture of compressed air and fuel;
a gas turbine (18) coupled to the combustor (16) and configured to generate electric power by expanding the combustion gas;
a separator (32) coupled to the combustor (16) and disposed upstream of the combustor (16), wherein said separator (32) is configured to reduce sulfur content of introduced fuel before said fuel is fed to the combustor (16).

2. The system (10) of claim 1, wherein the fuel comprises natural gas.

3. The system (10) of claim 1 or 2, wherein the sulfur content comprises hydrogen sulfide, sulfur dioxide, mercaptan, or the like.

4. The system (10) of any of the preceding claims, wherein the separator (32) is configured to reduce the sulfur content of said fuel by membrane separation, absorption into a solvent, liquid phase oxidation, adsorption with a sorbent, or combinations thereof.

5. The system (10) of any of the preceding claims, further comprising a heat exchanger (24) coupled to the gas turbine (18) and disposed downstream of the gas turbine (18); wherein the heat exchanger (24) is configured to transfer an exhaust gas from the gas turbine (18) in heat exchange relationship with a cooling medium so as to generate a cooled exhaust gas.

6. The system (10) of any of the preceding claims, wherein the gas turbine unit (12) comprises a compressor (14) coupled to the combustor (32) and configured to feed compressed air to the combustor (32); wherein at least a portion of an exhaust gas from the gas turbine (18) is recirculated to the compressor (14) via a recirculation duct (30).

7. The system of claim 6, further comprising an exhaust gas recirculation cooler provided to the recirculation duct and configured to further cool the portion of the cooled exhaust gas from the heat exchanger recirculated to the compressor.

8. The system (10) of claim 1, further comprising a carbon dioxide capture unit (28) configured to remove carbon dioxide from an exhaust gas generated from the gas turbine (18).

9. The system of claim 5, further comprising a carbon dioxide capture unit configured to remove carbon dioxide from the cooled exhaust gas from the heat exchanger.

10. The system of any of the preceding claims, wherein the gas turbine unit comprises a compressor coupled to the combustor and configured to feed compressed air to the combustor; wherein at least a portion of an exhaust gas from the gas turbine is recirculated to the compressor via a recirculation duct.

11. The system of claim 10, further comprising an exhaust gas recirculation cooler provided to the recirculation duct and configured to cool at least the portion of the exhaust gas from the gas turbine recirculated to the compressor.

12. A combined cycle power generation system (10), comprising:
a gas turbine unit (12) comprising:
a combustor (16) configured to generate a combustion gas by combusting a mixture of compressed air and fuel;
a gas turbine (18) coupled to the combustor (16) and configured to generate electric power by expanding the combustion gas;
a separator (32) coupled to the combustor (16) and disposed upstream of the combustor (16); wherein the separator (32) is configured to reduce sulfur content of said fuel before said fuel is fed to the combustor (16);
a heat recovery unit (34) comprising a heat exchanger (24) coupled to the gas turbine (18) and configured to transfer at least a portion of an exhaust gas from the gas turbine (18) in heat exchange relationship with a cooling medium so as to generate a cooled exhaust gas.

13. A system (10) comprising:
a gas turbine unit (12) comprising;
a combustor (16) configured to generate a combustion gas by combusting a mixture of compressed air and fuel;
a gas turbine (18) coupled to the combustor (16) and configured to generate electric power by expanding the combustion gas;
a separator (32) coupled to the combustor (16) and disposed upstream of the combustor (16), wherein said separator (32) is configured to reduce sulfur content of introduced fuel before said fuel is fed to the combustor (16);
a heat exchanger (24) coupled to the gas turbine (18) and configured to transfer an exhaust gas from the gas turbine (18) in heat exchange relationship with a cooling medium so as to generate a cooled exhaust gas;
a carbon dioxide capture unit (28) configured to remove carbon dioxide from the cooled exhaust gas fed from the heat exchanger (24).

14. A system (10) consisting of:
a gas turbine unit (12) comprising;
a compressor (14) configured to generate compressed air;
a combustor (16) coupled to the compressor (14) and configured to generate a combustion gas by combusting a mixture of compressed air and fuel;
a gas turbine (18) coupled to the combustor (16) and configured to generate electric power by expanding the combustion gas;
a separator (32) coupled to the combustor (16) and disposed upstream of the combustor (16), wherein said separator (32) is configured to reduce sulfur content of introduced fuel before said fuel is fed to the combustor (16);
wherein an exhaust gas from the gas turbine (18) is recirculated to the compressor (14) via a recirculation duct (30).

15. A method for reducing corrosion in a gas turbine unit of an electric power generation system, the method comprising:
reducing sulfur content in a fuel via a separator disposed upstream of a combustor;
feeding the fuel from the separator to a combustor;
combusting a mixture of air and fuel from the separator in the combustor to generate a combustion gas;
expanding the combustion gas via a gas turbine to generate power.
